# EUROPEAN PATENT SPECIFICATION

(11) **EP 2 614 570 B1**
(45) Date of publication and mention of the grant of the patent: **26.10.2016**
(21) Application number: 11773855.9
(22) Date of filing: 08.09.2011
(51) Int. Cl.: H02J 3/18

(54) **METHOD FOR AUTOMATICALLY RE-PHASING THE CURRENT OF A DOMESTIC ELECTRICAL NETWORK**
VERFAHREN ZUR AUTOMATISCHEN REPHASIERUNG DES STROMS EINES HAUSHALTSSTROMNETZES
PROCÉDÉ DE REMISE EN PHASE AUTOMATIQUE DU COURANT D'UN RÉSEAU ÉLECTRIQUE DOMESTIQUE

(30) Priority: 10.09.2010 IT MI20101646
(43) Date of publication of application: 17.07.2013
(73) Proprietor: MICROPOWER S.r.l., 47843 Misano Adriatico, (RN) (IT)
(72) Inventor: TENTONI, Renzo, I-47843 Misano Adriatico, RIMINI (IT); TENTONI, Mauro, I-47843 Misano Adriatico, RIMINI (IT)
(74) Representative: Mozzi, Matteo
(86) International application number: PCT/IB2011/053931
(87) International publication number: WO 2012/032487

(56) References cited:
- EP-A1- 0 113 872
- GB-A- 1 329 492
- US-A- 4 104 576
- US-A- 4 417 196
- US-A- 4 605 890
- ZEMERICK S ET AL: "Design of a microprocessor-controlled personal static VAr compensator (PSVC)", 2002 IEEE POWER ENGINEERING SOCIETY. SUMMER MEETING. CONFERENCE PROCEEDINGS. CHICAGO, IL, JULY 21 - 25, 2002; [IEEE POWER ENGINEERING SOCIETY], NEW YORK, NY : IEEE, US, 25 July 2002 (2002-07-25), pages 1468-1473VOL.3, XP031212885, ISBN: 978-0-7803-7518-5
- MICROCHIP: "PIC16F87X. 28/40-Pin 8-Bit CMOS FLASH Microcontrollers", 20010101; 1 - 218, 1 January 2001 (2001-01-01), XP007918930,

## Description

The present invention refers to techniques for re-phasing current and in particular to a method and relative apparatus for automatically re-phasing the current of a domestic electrical network.

Due to increasingly large power consumption and conditions of use linked to greatly varying consumption habits in recent years, energy has become a relatively scarce resource.

For this reason a rational use of electrical energy makes it necessary, on the one hand, to have apparatuses arranged to produce a higher yield for the same energy consumption (consider for example the lighting obtained with energy-saving light lamps that emit a greater amount of light while absorbing the same amount of electrical energy absorbed by incandescent lamps) and, on the other hand, to increase the overall efficiency of electrical systems in using the energy supply equivalent to lower dissipation of useful energy.

With particular reference to these last aspects, a fundamental role is represented by the technique known by the term re-phasing of current.

Such a technique is based on the assumption that in alternating current circuits the power absorbed by a generic user (for example an electric device or machine such as an induction motor, a transformer, a fluorescent lamp, a resistance welder, and so on) can be considered as the sum of two components of different kinds, an active power and a reactive power.

As known, active power (measured in kW) is what makes the useful effect of the machine or electrical device (the work, heat, force, movement, and so on). Reactive power (measured in kVAR), on the other hand, is what produces just the electric field necessary for the machine or electric device to work, i.e. the electric field that is used to produce the magnetization flow of the users that, in alternating current, require the presence of magnetic fields in order to be able to work. The composition of such powers provides the so-called apparent power, measured in kVA, which represents the power actually delivered to the user by the power company.

Considering this, an indicator of rational, efficient and cost-effective use of electrical energy is represented by the power factor (cosϕ), such a term meaning the ratio (variable between 0 and 1) between the active power and the apparent power.

The use of electrical energy is more efficient when the power factor is higher and, vice-versa, less efficient the further it strays from the value 1.

It is also known that the actual value of the power factor is linked to the temporal phase shift existing between the voltage signal and the current signal; said phase shift depends on the nature of the loads applied to the generic circuit involved.

In particular, in the case in which the loads are purely resistive, the voltage signal and the current signal are in phase with one another, and therefore the power factor (cosϕ) is equal to the value 1; in the case in which the loads are inductive or, vice-versa, capacitive, the current signal is out of phase with respect to the voltage signal, i.e. it is delayed for inductive loads and early for capacitive loads, respectively. It should be noted that, as known, delay and earliness of phase refer to the moments of time in which the voltage signal and the current signal (both variants with sinusoidal periodic law) reach the respective maximum values, or pass through the value 0.

Since as the power factor move further away from the value 1, the proportion of energy that is pointlessly wasted increases, the power company applies economic penalties for a low power factor on users when the power factor (cosϕ) is less than the value 0.9 and when the power used is greater than 15kW to 400V.

Moreover, a low power factor (cosϕ less than 0.9), also involves other drawbacks such as: increase in contractual apparent power (kVA); increased losses in active energy in electrical cables (losses by Joule effect); lack of the possibility of reducing the section of the electrical cables; decrease in the active power (kW) available to the secondary of a medium to low voltage transformer.

Up to now, most of the current electrical systems need the user devices to have the prevalent presence of inductive loads that lower the power factor and therefore, to avoid the consequences listed above linked to a low power factor, it is customary, and sometimes even a legal requirement, to re-phase the electrical systems through connection to them of suitable banks of correction capacitors, arranged in parallel with the inductive loads. The addition of inductive loads makes it possible to juxtapose over the inductive phase shift a phase shift of opposite sign (capacitive) that allows the power factor resulting from the electrical system to be brought back to acceptable values.

In industry, in which there is well-known use of three-phase currents operating prevalently with voltages of between 230-400V, such a re-phasing technique is carried out by using re-phasing assemblies that use banks of capacitors combined with damping inductances.

In the home or in analogous applications for civil use (offices, shops, and so on) until very recently the problem of re-phasing had never been considered because it had always been believed that, with the relatively low powers installed, for the power company to check the cost of reactive power would be a technical burden and economically unjustifiable in relation to the economic return that could actually be obtained.

However, currently, considering the increasingly limited availability of energy resources and the need to exploit them as rationally as possible, also for the known implications of environmental impact, there is a need to consider the problem of re-phasing current also in domestic networks, i.e. in smaller systems like those for use at home, also in relation to their impact on an economy of scale connected to the high number of existing domestic systems.

US 4104576 discloses a phase compensator for AC network which has two groups of reactances controlled stepwise and continuously by a switching unit. A first group of reactance devices are each serially connected to the network through a switching device, and a second reactance device is connected in the network through a control device for continuous control of the reactance provided by the second reactance device. A source of control signals responds to a signal determinative of the desired reactive power and controls the switching device for step-wise varying the reactance provided thereby and likewise controlling the control device for continuous control of the reactance contributed by the second reactance device to provide for overall continuous control of reactance as a function of the signal.

US 4417196 discloses a cord set embodying miniaturized power factor control circuits as power-conservation devices. The cord set involves a plug unit connected to one end of a multiple-conductor cord or cable, and destined to concurrently serve different electrical loads within a given utilization device. A suitably miniaturized power-factor control circuit is embodied within the plug, so that when plugged into a conventional a-c power outlet receptacle, a first two of the cable conductors can deliver suitably modified voltage appropriate to the instantaneous load requirements served by the modified voltage, while one of these first two cable conductors and a third cable conductor can concurrently deliver voltage appropriate to the different electrical load which it serves.

A method for automatically re-phasing the current in a domestic electrical network of the known type operates according to the same principle used in industrial systems, i.e. it controls the insertion in parallel with inductive loads present in the electrical system of capacitive loads in order to take the value of the power factor back to acceptable values.

However, such a method for automatically re-phasing the current has some drawbacks, including: a very high margin of error; in different situations, the insertion of a greater number of capacitive loads than needed, so that such loads become a load for the electrical network; in the case of high resistive-inductive load with high prevalence of resistive load, the difficulty in distinguishing the inductive load component, which leads to the lack of insertion of the capacitive loaded needed.

The purpose of the present invention is to propose a method for automatically re-phasing the current of a domestic electrical network that is more reliable than the one described with reference to the prior art and that, in particular, is able to provide a substantially reduced margin of error.

Such a purpose is achieved through a method for automatically re-phasing the current in a domestic electrical network in accordance with claim 1

Preferred embodiments of such a method are defined in the dependent claims 2-12.

Also an object of the present invention is an automatic electrical re-phasing apparatus of the current in an electrical network according to claim 13.

Further characteristics and advantages of the device according to the invention will become clearer from the following description of preferred example embodiments, given for indicating and not limiting purposes, with reference to the attached figures, in which:
- figure 1 schematically illustrates, through a block diagram, an electrical re-phasing apparatus according to an example of the invention;
- figure 2 schematically illustrates, from a circuitry point of view, the electrical re-phasing apparatus of figure 1, and
- figure 3 schematically illustrates, through a flow diagram, a method for automatically re-phasing the current in a domestic electrical network according to an example of the invention.

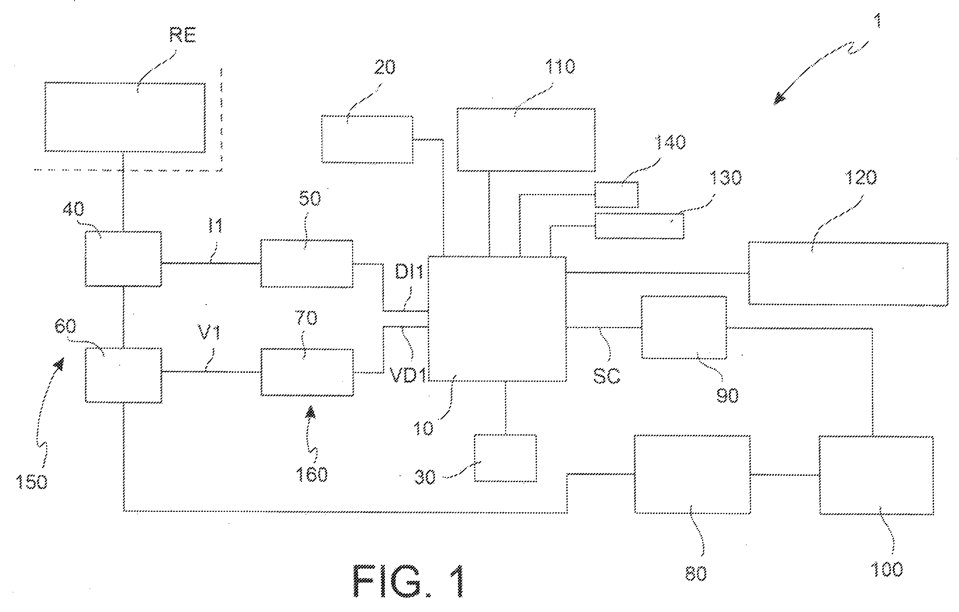

With particular reference to figure 1, it is now described an electrical apparatus 1 for automatically re-phasing the current of a domestic electrical network or similar, according to an example of the invention.

The electrical apparatus 1 comprises a central processing unit 10, for example a microprocessor, able to be programmed to execute a program code integrated in it (software or firmware) in order to implement the automatic re-phasing method according to an example of the invention, which will be described hereafter.

A particular example of central processing unit 10 is a microprocessor for military use that, advantageously, allows use in a temperature range from-40°C to +85°C.

The electrical apparatus 1 also comprises a non-volatile memory 20, for example a flash ROM (Read Only Memory), operatively connected to the central processing unit 10 in order to store configuration data of the electrical apparatus 1 and data processed by the central processing unit 10 during the implementation of the automatic re-phasing method. It should be noted that such a non-volatile memory 20 is used to store data processed during the execution of the automatic re-phasing method that can be analysed later even after the disconnection of the electrical apparatus 1 from the electrical network RE.

The electrical apparatus 1 also comprises a volatile memory 30, for example a RAM (Read Access Memory), operatively connected to the central processing unit 10 in order to load the program that can be executed by the central processing unit to implement the automatic re-phasing method according to the invention.

The electrical apparatus 1 comprises means 150 for detecting electrical operating parameters of the electrical network RE operatively associated with the central processing unit 10 through means 160 for conditioning such electrical parameters. By electrical operating parameters it is meant a current signal I1 circulating in the electrical network RE, a voltage signal V1 present in the electrical network RE, a phase shift between the current signal and the voltage signal, respectively, representative of the power factor, a typical operative network frequency.

In particular, such means 150 for detecting comprise a current sensor 40, *per sé* known, operatively connected to the domestic electrical network, schematically indicated in figure 1 and indicated with reference letters RE. Such a current sensor 40 is, for example, a toroidal sensor for detecting the intensity of the electrical current flowing in the electrical network 2. In particular, the toroidal sensor can be made through a single body, able to be crossed by an electrical line of the electrical network RE, or it can comprise at least two half-toroids, able to be associated with each other so as to constitute a single piece able to be crossed by the electrical line of the electrical network RE.

The means 160 for conditioning electrical parameters comprise in particular a current conditioning module 50 operatively arranged between the current sensor 40 and the central processing unit 10. Such a current conditioning module 50, *per sé* known, is configured to receive in input an instantaneous current signal I1 detected by the current sensor 40 and to provide the central processing unit 10 with a respective digital signal DI1 representative of the current signal I1 detected.

It should be noted that the current sensor 40 and the current conditioning module 50 can be operatively connected together in direct electrical connection or, in accordance with further embodiments, through a wireless connection or by powerline. This particular solution allows the electrical apparatus 1 to be able to be advantageously inserted in any electrical energy socket for domestic use, from which a voltage signal can be taken. The parameters relative to the electric current are detected by the toroidal sensor equipped with integrated microprocessor, which can be positioned in the container or in the control station of the building (for example an apartment) so that it can detect the total current absorbed by the system. The parameters thus processed are sent to the electrical apparatus 1 through the wireless connection or by powerline, advantageously making it possible to eliminate all the electrical connections that would also be made by a qualified technician. Moreover, the fact that the electrical connections are eliminated also, advantageously, makes it possible to manufacture the electrical apparatus 1 in a blister pack in the case of a massive installation of electrical apparatuses of the type described. In addition, the fact that the electrical connections are eliminated, even more advantageously, allows easier replacement of the electrical apparatus 1 since this involves the removal and insertion of a new apparatus in an energy socket.

The means 150 for detecting also comprise a voltage sensor 60, *per sé* known, operatively connected to the domestic electrical network RE. Such a voltage sensor 60 is, for example, a current/voltage converter (current transformer), *per sé* known.

The means 160 for conditioning electrical parameters also comprise a voltage conditioning module 70 operatively arranged between the voltage sensor 60 and the central processing unit 10. Such a voltage conditioning module 70, *per sé* known, is configured to receive in input an instantaneous voltage signal V1 detected by the voltage sensor 60 and to provide the central processing unit 10 with a respective digital signal DV1 representative of the voltage signal V1 detected.

It should be observed that the current and voltage sensors used, advantageously, have double insulation in order to make the secondary circuits safe and totally independent from the primary 230 V alternating current power supply, in particular as regards the use of the current transformer (current/voltage converter) that ensures high precision of measurement even at low currents (for example, current values equal to 400/500/600mA) and no dissipation over high currents (for example current values equal to 16-32A), prerogatives totally contrary to the most common current sensor of the type in series with the "shunt" line normally used in energy meters.

The electrical apparatus 1 also comprises a plurality of microcapacities 80, control means 90 of such a plurality of microcapacities 80 and a plurality of switches 100.

In particular, such control means 90 are operatively connected to the central processing unit 10 in order to receive relative control signals SC from it. Such control means 90 are also operatively connected to the plurality of switches 100 in order to control their relative opening or closing based on the aforementioned control signals SC.

In greater detail, such a plurality of microcapacities 80 is operatively connected between the plurality of switches 100 and the electrical network RE. Moreover, the plurality of microcapacities 80 is arranged for insertion into, and removal from, the electrical network RE based on the actuation of the plurality of switches 100 by the control means 90.

It should be noted that the control means 90 are, for example, of the static type, i.e. they do not have any mobile component, and, preferably, they comprise opto-electronic means (not shown in the figure) to control the insertion into, and removal from, the electrical network RE of the plurality of microcapacities 80.

Such opto-electronic means preferably comprise triacs and optotriacs that control the triacs, both *per sé* known, so as to place them in conduction substantially at the moment when it is necessary to activate the switching closed of the plurality of switches 100 that actually electrically connect the plurality of microcapacities 80 to the electrical network RE.

The opto-electronic means advantageously make it possible to obtain an electrical apparatus 1 with a high degree of galvanic insulation.

It should also be noted that the way according to which the control means 90 carry out the insertion and removal of the plurality of microcapacities 80 in the electrical network RE is *per sé* sufficient to avoid subjecting the plurality of microcapacities to damage through inrush current effects; however, in order to create a redundant protection suitable for ensuring a long useful life with maximum reliability, the electrical apparatus 1 also comprises means (not shown in figure 1) for protecting against overcurrents, for example NTC elements and/or varistor elements.

Moreover, it should be noted that the electrical apparatus 1 comprises further devices (not shown in figure 1) for protecting against overvoltages, on the 230 V alternating current line of the type up to 20 kA, non-flammable with reaction time of less than 25 ns, in order to dissipate extremely brief atmospheric discharges induced on the delivery line that could cause damage to the user line and to the entire electrical apparatus 1 in all of its components.

With reference again to figure 1, the plurality of microcapacities 80 is operatively arranged between the plurality of switches 100 and the electrical network RE.

It should be noted that such a plurality of microcapacities 80 is distributed so as to be divided, for example, in at least four groups of microcapacities of increasing number (group with one microcapacity; group with two microcapacities; group with three microcapacities; group with four microcapacities, and so on). It should be noted that the groups of microcapacities can also be more than four in number, multiples of the first microcapacity or non-multiples of the first microcapacity. Each group of microcapacities is electrically connected to a switch of such a plurality of switches 100. The opening and closing of one or more switches of such a plurality of switches 100 makes it possible to have, in the described example, up to sixteen different useful combinations of microcapacities able to be inserted into the electrical network RE.

Such a plurality of microcapacities 80 preferably comprises microcapacitors comprising armatures in which a metallic layer covers an underlying support layer, preferably made from plastic material. For example, such armatures can be made with a layer of metalized polypropylene, having operation at 275 V in alternating current, insulation class X2, temperatures of use from-40°C to + 110°C. Such types of armatures make it possible to obtain very high operating and electrical safety.

With regard to the plurality of switches 100, they preferably comprise solid state switches (semi-conductor switches). It should be noted that the presence of solid state switches allows silent operation, with minimum level sound emissions, well below the audible threshold, thanks to the activation detection of the switches synchronised on the passage for the value 0 of the system electrical network voltage, in order to also prevent the possible disturbances induced by micro-lowering of current due to the capacitive engagement of the plurality of microcapacities.

Going back to figure 1 once again, the electrical apparatus 1 also comprises a first display module 110, for example a three-figure LCD display, operatively connected to the central processing unit 10. The first display module 110 is controlled by the central processing unit to instantly provide a value representative of the electrical current flowing in the electrical appliance in order to promote the instant monitoring of the electrical current consumption. The reading of an electrical current value is certainly more obvious and within the capabilities even of people without experience in reading power consumption, as occurs in conventional energy meters.

The electrical apparatus 1 also comprises a second display module 120, for example a bank of LEDs, *per sé* known, operatively associated with the central processing unit 10. The second display module 120 is controlled by the central processing unit 10 to instantly provide information representative of the working state of the electrical apparatus 1 (number of microcapacities that have intervened), of the permitted tolerance band, of the intensity of the phase shift correction, in order to advantageously have total viewable control of the correct operation of the electrical apparatus 1 even by untrained people. In particular, the second display module 120 makes it possible to display a settable measurement of the phase shift correction, i.e. from a phase shift 0, corresponding to no LEDs switched on, up to the last combination inserted corresponding to all of the LEDs switched on. The amount of LEDs switched on is able to actually provide information indicative of the amount of energy recovered in percentage from 0 to a maximum value.

Moreover, the electrical apparatus 1 can be equipped with a further display module (not shown in figure 1) operatively connected to and controlled by the central processing unit 10 in order to allow the instant display of the presence of error situations due to excessive unbalancing, of the capacitive and inductive electrical line, in order to signal, advantageously, the immediate incorrect connection and the possible malfunction due to breaking, or anomalies, of the user system. Such a further display module can be used by the processing unit 10 to automatically display the "sleeping" (stand-by) state of the electrical apparatus 1, in the case of no consumption on the electrical user line of the electrical network RE, in order to advantageously avoid improper actuations not relevant to energy saving and to further minimise the consumption inside the electrical apparatus 1.

With reference again to figure 1, the electrical apparatus 1 comprises a temperature detection module 130, for example a temperature probe, *per sé* known, operatively connected to the central processing unit 10. Regarding this, the central processing unit 10 is configured to perform a self-protecting function of the electrical apparatus 1, for example automatically going into sleeping (stand-by) mode, in the case in which the operating temperature detected by the temperature detection module is above a predetermined safety temperature value. Such a detected temperature can also be displayed on the second or on the further display module of the electrical apparatus 1 in order to provide further information on the state of the apparatus itself. It should be noted that the central processing unit is also configured to reactivate the electrical apparatus 1 in the case in which the temperature detected by the temperature detection module 130 goes back to a value below the predetermined safety temperature value.

The electrical apparatus 1 also comprises a communication module 140, for example an SCI port (Serial Communication Interface), *per sé* known, operatively connected to the central connection unit 10. Such a communication port uses a serial protocol and through its configuration it can be adapted to any communication protocol (for example protocol RS385; RS842; etc.). Such a communication port is configured to allow the electrical apparatus 1 to communicate with other electrical devices through a communication mode like, for example, powerline mode, via Wi-fi, via zigbee, via GSM network, and so on. Moreover, such a communication port 140 can be operatively connected, through cabled connection or through one of the communication modes indicated above, with an electronic processor, for example a personal computer, so as to be able to display on it, in the form of graphs, the energy really absorbed by the electrical system, the energy recovered by the electrical apparatus 1, as well as other electrical parameters detected by means of the electrical apparatus 1 relative to the electrical loads connected to the electrical network RE.

Regarding this, the central processing unit 10 is configured to control, based on the electrical parameters monitored relative to the loads connected to the electrical network RE, the switching on or off of a load connected to the electrical network, possibly establishing a precedence level among many loads, in order to keep down the electrical energy consumption.

Moreover, the central processing unit 10 is configured to control, based on such electrical parameters monitored, the resetting of the power supply voltage of loads connected to the electrical network that absorb electrical energy also in stand-by mode (for example, television set, personal computer, stereo system, intercom, and so on).

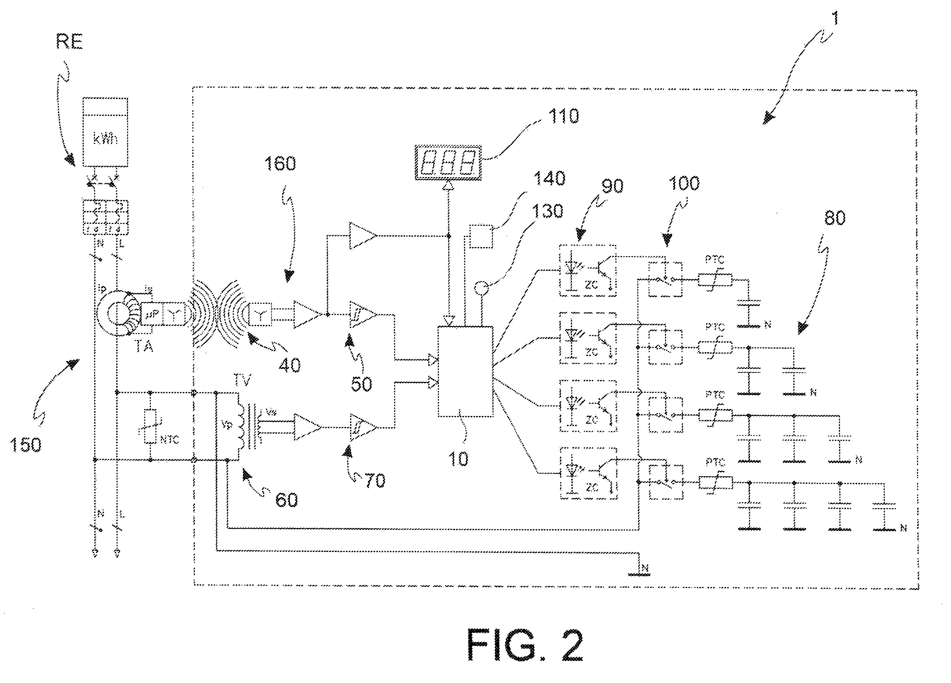

Figure 2 schematically shows, from a circuitry point of view, the electrical apparatus 1 of the example of figure 1 in which the elements of such an electrical apparatus already described in general with reference to figure 1 are illustrated with the respective circuit symbol and indicated, for the sake of simplicity, with the same reference numerals as figure 1.

From a constructive point of view, the electrical apparatus 1 is manufactured using, advantageously, very low consumption electronic elements and devices in order to obtain "undersize" energy absorption of the electrical control line, so as to minimise to the greatest possible extent the environmental impact in energy terms and consider the actual consumption of the electrical apparatus without any additional cost (consumption that is unable to be detected by the conventional energy meter).

It should be noted, finally, that, advantageously, the electrical apparatus 1 is arranged to operate normally even with network voltage values equal to 170-180 V, thus in a working range equal to 170-240 V.

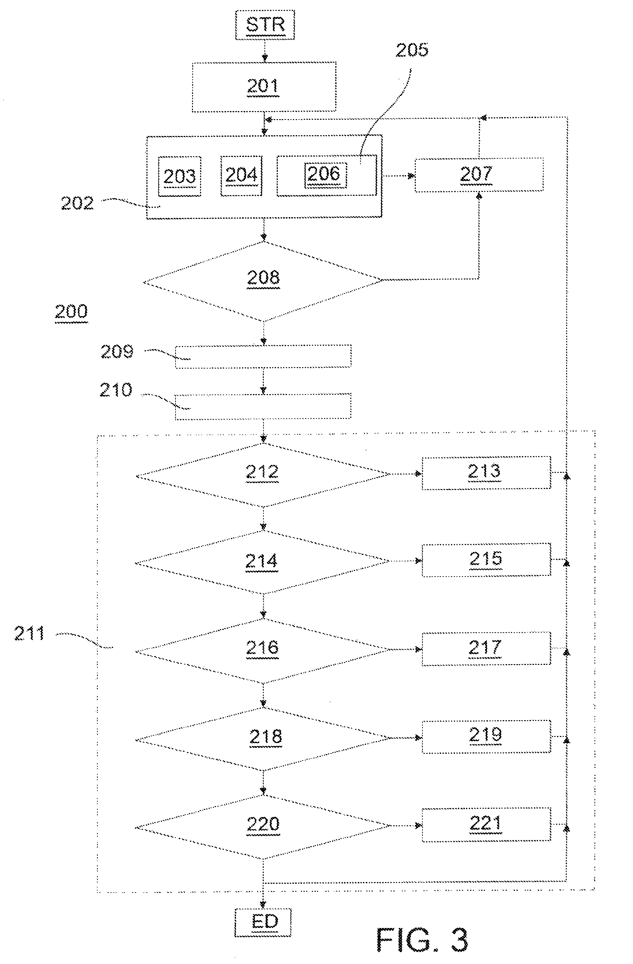

Now with reference to figure 3, we shall describe a method for automatically re-phasing the electrical current of a domestic electrical network, according to an example of the invention.

The method for automatically re-phasing the electrical current of a domestic electrical network RE is indicated in figure 3 with reference numeral 200. Hereafter, for the sake of brevity, it will also simply be called re-phasing method 200.

The re-phasing method 200 comprises a symbolic start step STR.

The re-phasing method 200 comprises a step of setting 201, through the central processing unit 10, the electrical operating parameters of the electrical apparatus 1 like, for example, a predetermined tolerance band of the power factor (at the maximum up to 0.99), a predetermined safety temperature value (typically a maximum temperature value equal to 70°C), the working voltage (for example 180V or 230V), the network frequency (for example 50-60Hz).

It should be noted that the electrical apparatus is of the stand-alone type. For example, the step of setting 201 electrical parameters takes place through the connection of the electrical apparatus 1 to a precision resistance and the switching of a microswitch.

Thereafter, the re-phasing method 200 also comprises a step of comparing 202, for a first portion of a set execution time period, through the central processing unit 10, electrical operating parameters detected in the electrical network RE with respective preset electrical reference operating parameters. By electrical operating parameters it is meant a current signal I1 flowing in the electrical network RE, a voltage signal V1 present in the electrical network RE, a phase shift between the current signal and the voltage signal, respectively, representative of the power factor, a typical operating network frequency.

With regard to the processing time range, it should be noted that the central processing unit 10 is preferably configured to execute the re-phasing method 200 every second. Therefore, an example of an execution time range is one second. As regards the first portion of the set execution time period, it should be observed that the step of comparing 202 is carried out inside the first portion of the set execution time period with a scalar time lapse equal for example to 100 microseconds. It should be noted that such a step of comparing 202, just like other steps of the method 200 preceding a step of controlling the insertion or removal of an amount of the plurality of microcapacities, which will be described hereafter, is executed in the first portion of the set execution time period. As an example, in the case in which the set execution time period is equal to one second, the first portion can be equal to about 999990 microseconds.

The aforementioned step of comparing 202 comprises a step of detecting 203, through the current sensor 40, in the first portion of the set execution time period, the current signal I1 flowing in the electrical network RE and a step of detecting 204, through the voltage sensor 60, in the first portion of the set execution time period, the voltage signal V1 present in the electrical network RE.

The step of comparing 202 also comprises a step of calculating 205, through the central processing unit 10, in the first portion of the set execution time period, based on the electrical operating parameters detected in the electrical network (RE), in particular the current signal I1 and the voltage signal V1, the phase shift representative of the power factor.

In particular, such a step of calculating 205, comprises the step of generating 206, through current conditioning means 50, a digital signal DI1 representative of the detected current signal, and, through voltage conditioning means 70, a digital signal VD1 representative of the detected voltage signal V1, again in the first portion of the set execution time period.

It should be noted that the step of calculating 205 the phase shift representative of the power factor generates a result the size of which makes it possible to establish the type of phase shift: if the result is negative then the phase shift is due to a capacitive reactive load; if the result is positive then the phase shift is due to an inductive reactive load).

It should also be noted that in the case in which at least one electrical operating parameter of the electrical network RE detected and/or calculated is zero or greater with respect to the respective reference electrical operating parameter value, the central processing unit 10 is configured to generate a respective error signal.

Regarding this, the automatic re-phasing method 200 also comprises a step of resetting 207, through the processing unit 10, based on such an error signal, the batteries of the electrical apparatus 1 in order to take it into a stand-by state. From this point onwards, the re-phasing method 200 starts again with the step of comparing 202, described earlier.

In the case in which all of the electrical operating parameters of the electrical network RE detected and/or calculated are non-zero or less than the respective value of reference electrical operating parameters, for a set number of times (for example three), the central processing unit 10 is configured to continue the re-phasing method 200 with a step of comparing 208, through the central processing unit 10, in the first portion of the set execution time period, the operating temperature of the electrical apparatus 1 with the predetermined safety temperature value.

In the case in which such an operating temperature of the electrical apparatus 1 is above the preset safety temperature value, the central processing unit 10 is configured to generate a respective error signal and the re-phasing method 200 proceeds with the step of resetting 207 described earlier.

On the other hand, in the case in which such an operating temperature of the electrical apparatus 1 is below the preset operating temperature value, the central processing unit 10 is configured to continue the re-phasing method 200 with a step of sampling 209, through the central processing unit 10, in the first portion of the set processing time period, electrical operating parameters of the electrical network RE, such as the amplitude of the detected current signal I1 and the amplitude of the detected voltage signal V1 and the calculated phase shift.

The re-phasing method 200 also comprises the step of calculating 210, through the central processing unit 10, in the first portion of the set execution time period, a correction value of the calculated phase shift. It should be noted that such a correction value is preferably expressed in terms of capacity.

Thereafter, the re-phasing method 200 comprises a step of controlling 211, through the processing unit 10, in a second portion of the set execution time period, distinct from the first portion, the insertion and the removal of an amount of the plurality of microcapacities 80 based on such a correction value.

It should be noted that all of the steps of the re-phasing method 200 prior to the step of controlling 211 are preferably executed by the central processing unit 10 in a first portion of the set processing time period whereas the step of controlling 211 is executed, by the electronic sampling unit 10, in a second portion of the set execution time period, distinct from the first portion.

In particular, the second portion of the execution time period is shorter than the first portion. For example, in the case of an execution time period of the re-phasing method equal to one second, the second portion of such a period is equal to roughly 10 microseconds whereas, as already stated earlier, the first portion of the set execution time period is equal to 999990 microseconds. Such a second portion, corresponding to the time necessary to execute the step of controlling 211, can also be defined as control or actuation time. The first portion, substantially corresponding to the time necessary to execute step of comparing, calculating and so on, can also be defined as analysis time.

It should also be noted that by the term distinct it is meant that in the set execution time period (for example one second) the second portion follows the first portion. Moreover, during the execution of the step of controlling 211 in the second portion of the set execution time period, the steps of the re-phasing method 200 executed in the first portion of such a time period are not executed. In fact, there is never juxtaposition of the step of controlling 211 with the steps of the method executed prior to it in order to avoid the possibility of having any interference in the steps executed in the first portion of the set execution time period.

Moreover, this advantageously makes it possible to obtained a high stability of the electrical apparatus 1 with a small number of switches and to increase the yield of the electrical apparatus 1 avoiding situations of stalling for fairly long time periods that could otherwise continue until there are drastic changes of the network parameters (insertion of strong inductive or resistive loads).

The step of controlling 211 comprises a step of checking 212, through the central processing unit 10, based on the calculated correction value, whether the electrical network is in a condition of inductive tolerance (correction value up to +8°). In the affirmative case, the re-phasing method 200 continues with a step of maintaining 213, through the central processing unit 10, the position indicating the presence of inductive tolerance. From this point on, the re-phasing method 200 starts back with the step of comparing 202, described earlier.

In the non-affirmative case, the step of controlling 211 also comprises a step of checking 214, through the central processing unit 10, based on the calculated correction value, whether the electrical network is in a condition of capacitive tolerance (correction value up to -8°). In the affirmative case, the re-phasing method 200 continues with a step of maintaining 215, through the central processing unit 10, the position indicating the presence of capacitive tolerance. From this point on, the re-phasing method 200 starts back with the step of comparing 202, described earlier.

In the non-affirmative case, the step of controlling 211 also comprises a step of checking 216, through the central processing unit 10, based on the calculated correction value, whether the electrical network needs an inductive adjustment (correction value from +8° to +90°). In the affirmative case, the re-phasing method 200 continues with a step of adjusting 217, through the central processing unit 10, the plurality of microcapacities 80 in order to follow the rising power factor indicating the presence of a need for inductive adjustment. From this point on, the re-phasing method 200 starts back with the step of comparing 202, described earlier.

In the non-affirmative case, the step of controlling 211 also comprises a step of checking 218, through the central processing unit 10, based on the calculated correction value, whether the electrical network needs a capacitive adjustment (correction value from -8° to -90). In the affirmative case, the re-phasing method 200 continues with a step of adjusting 219, through the central processing unit 10, the plurality of microcapacities 80 in order to follow the decreasing power factor indicating the presence of the need for capacitive adjustment. From this point on, the re-phasing method 200 starts back with the step of comparing 202, described earlier.

In the non-affirmative case, the step of controlling 211 comprises the step of checking 220, through the processing unit 10, based on such a correction value, whether there is an error (correction value from +90° to -90°). In the affirmative case, the re-phasing method 200 comprises a step of resetting 221, through the central processing unit 10, the batteries of the electrical apparatus 1 in order to take it into a stand-by state also indicating the detected error. From this point on, the re-phasing method 200 starts back with the step of comparing 202, described earlier.

It should also be noted that the central processing unit 10 is configured to execute the aforementioned steps of the re-phasing method 200 in a reiterated manner with time lapse in the order of milliseconds, until such a phase shift does not fall within a preset tolerance band. Such a preset tolerance band comprises phase shift values of between 0.97 and 0.99.

It should also be noted that the central processing unit 10 is configured to finely check the program codes integrated in it (firmware) so as to advantageously obtain high efficiencies since the program codes executed by the central processing unit 10 allow the electrical apparatus 1 to have higher sensitivity to any variation in phase shift angles, until it divides an extremely small part of inductive load over a large amount of resistive load (for example, in the case of a resistive load equal to 2000W and an inductive load equal to 200W, the electrical apparatus 1 is able to divide the two portions and automatically re-phase the inductive load equal to 200W).

The automatic re-phasing method 200 concludes with a symbolic end step ED.

As can be seen, the purpose of the invention is fully accomplished since the automatic re-phasing method described makes it possible to obtain a power factor (cosϕ) very close to one, i.e. 0.99 (set limit of 8° phase shift). It should be noted that the maximum limit of 0,99 is a limit set to have a compromise between maximum re-phasing to be obtained and stability of the electrical network. This, however, does not rule out configuring the electrical apparatus 1 to require a power factor equal to 0.991 - 0.992 - 0.993 - 0.994 - 0.995 - 0.996 - 0.997.

Moreover, in the case of strong resistive load with a small inductive component (for example loads such as washing machines, dishwashers, electric ovens and so on), through the described re-phasing method that allows a high sensitivity to phase shift, it allows the electrical apparatus to divide the inductive part from the great resistive load and deal with correcting just the inductive part.

Finally, it is repeated that the re-phasing method just described is certainly more sensitive with respect to the one described with reference to the prior art since the steps of the re-phasing method preceding the step of controlling are executed, by the central processing unit 10, in a first portion of the set execution time period, whereas the step of controlling 210 is executed, again by the central processing unit 10, in a second portion of the set execution time period, subsequent and distinct with respect to the aforementioned first portion.

Indeed, this makes it possible to increase the yield of the electrical apparatus 1 avoiding situations of stalling for fairly long time periods that could otherwise last until there are drastic changes of the network parameters (insertion of strong inductive or inductive loads).

Moreover, the step of controlling is advantageously executed only when the values calculated by the central processing unit are confirmed for a set minimum number of times (for example three).

This allows the central processing unit to not execute any step of controlling the insertion or removal of microcapacities to correct the phase shift when it is not necessary, seeking the maximum possible energy saving.

The described embodiments are only for illustrate purposes. The scope of the invention is defined by the appended claims.

## Claims

1. Method (200) for automatically re-phasing the current of a domestic electrical network (RE) or similar, by an electrical re-phasing apparatus (1) operatively connected to such an electrical network (RE), comprising steps of:
- comparing (202), for a first portion of a set execution time period, through a central processing unit (10) of such an electrical re-phasing apparatus (1), electrical operating parameters detected from the electrical network (RE) with respective preset electrical reference operating parameters, said step of comparing (202) comprising a step of calculating (205), through the central processing unit (10), based on such electrical operating parameters, a phase shift representative of the power factor;
- sampling (209), through the central processing unit (10), in the first portion of the set execution time period, such electrical operating parameters detected from the electrical network and the calculated phase shaft;
- calculating (210), through the processing unit (10), in the first portion of the set execution time period, a correction value of the calculated phase shift;
- controlling (211), through the central processing unit (10), in a second portion of the set execution time period, distinct from the first portion, the insertion or removal of a quantity of a plurality of microcapacities from the electrical network (RE) based on such a calculated correction value,
- resetting (207, 221), through the central processing unit (10), based on an error signal generated by the central processing unit (10), the batteries of the electric apparatus (1) in order to bring it into a stand-by state also indicating the detected error.

2. Method (200) according to claim 1, wherein the step of controlling (211) comprises a step of checking (212), through the central processing unit (10), based on the calculated correction value, whether the electrical network (RE) is in a condition of inductive tolerance.

3. Method (200) according to claim 2, wherein the step of controlling (211), in the case in which the network is in a condition of inductive tolerance, comprises the step of maintaining (213), through the central processing unit (10), such a position indicating the condition of inductive tolerance.

4. Method (200) according to claim 2, wherein the step of controlling (211), in the case in which the network is not in a condition of inductive tolerance, comprises a step of checking (214), through the central processing unit (10), based on the calculated correction value, whether the electrical network (RE) is in a condition of capacitive tolerance.

5. Method (200) according to claim 4, wherein the step of controlling (211), in the case in which the network is in a condition of capacitive tolerance, comprises the step of maintaining (215), through the central processing unit (10), such a position indicating the condition of capacitive tolerance.

6. Method (200) according to claim 4, wherein the step of controlling (211), in the case in which the network is not in a condition of capacitive tolerance, comprises the step of checking (216), through the central processing unit (10), based on the calculated correction value, whether the network needs an inductive adjustment.

7. Method (200) according to claim 6, wherein the step of controlling (211), in the case in which the network needs an inductive adjustment, comprises a step of adjusting (217), through the central processing unit (10), the plurality of microcapacities (80) in order to follow the rising power factor indicating that there is a need for inductive adjustment.

8. Method (200) according to claim 6, wherein the step of controlling (211), in the case in which the network does not need an inductive adjustment, comprises a step of checking (218), through the central processing unit (10), based on the calculated correction value, whether the electrical network needs a capacitive adjustment.

9. Method (200) according to claim 8, wherein the step of controlling (211), in the case in which the electrical network needs a capacitive adjustment, comprises a step of adjusting (219), through the central processing unit (10), the plurality of microcapacities (80) in order to follow the decreasing power factor indicating the presence of a need for capacitive adjustment.

10. Method (200) according to claim 8, wherein the step of controlling (211), in the case in which the electrical network does not need a capacitive adjustment, comprises the step of checking (220), through the processing unit (10), based on such a correction value, whether there is an error.

11. Method (200) according to any one of the previous claims, also comprising a step of comparing (208) through the central processing unit (10), in the first portion of the set execution time period, an operating temperature of the electrical apparatus (1) with a predetermined safety temperature value.

12. Method (200) according to any one of the previous claims, wherein said second portion of the set execution time period is shorter than the first portion of the set execution time period.

13. Automatic electrical re-phasing apparatus (1) of an electrical network (RE) comprising:
- a central processing unit (10);
- a non-volatile memory (20) and a volatile memory (30) operatively connected to the central processing unit (10);
- means (150) for detecting electrical operating parameters of the electrical network (RE) operatively connected to the central processing unit (10) through means (160) for conditioning such electrical parameters;
- control means (90) operatively connected between the central processing unit (10) and a plurality or switches (100), said control means (80) being arranged to control the opening or closing of said plurality of switches based on control signals (SC) supplied by the central processing unit (10);
- a plurality of microcapacities (80) operatively connected between said plurality of microswitches (100) and the electrical network (RE), said plurality of microcapacities (80) being arranged for insertion into, and removal from, the electrical network (RE) based on the actuation of the plurality of microswitches (100) by the control means (90);
said central processing unit (10) being configured to implement the automatic re-phasing method (200) according to any one of the previous claims.

## Patentansprüche

1. Verfahren (200) zur automatischen Rephasierung des Stroms eines Haushaltsstromnetzwerks (RE) oder ähnlichem durch eine elektrische Rephasierungsvorrichtung (1), welche mit einem derartigen elektrischen Netzwerk (RE) betriebsmäßig verbunden ist, umfassend die Schritte:
- Vergleichen (202) von elektrischen Betriebsparametern, welche von dem elektrischen Netzwerk (RE) erfasst werden, mit jeweiligen voreingestellten elektrischen Referenzbetriebsparametern für einen ersten Abschnitt einer festgelegten Ausführungszeitperiode durch eine zentrale Verarbeitungseinheit (10) einer derartigen elektrischen Rephasierungsvorrichtung (1), wobei der Schritt des Vergleichens (202) einen Schritt eines Berechnens (205) eines Phasenversatzes, welcher den Leistungsfaktor repräsentiert, durch die zentrale Verarbeitungseinheit (10) auf Grundlage derartiger elektrischer Betriebsparameter umfasst;
- Zusammenstellen (209) derartiger elektrischer Betriebsparameter, welche von dem elektrischen Netzwerk und dem berechneten Phasenversatz erfasst werden, durch die zentrale Verarbeitungseinheit (10) in dem ersten Abschnitt der festgelegten Ausführungszeitperiode;
- Berechnen (210) eines Korrekturwerts des berechneten Phasenversatzes durch die Verarbeitungseinheit (10) in dem ersten Abschnitt der festgelegten Ausführungszeitperiode;
- Regeln/Steuern (211) des Hinzufügens oder Entfernens einer Menge aus einer Mehrzahl von Mikrokapazitäten von dem elektrischen Netzwerk (RE) auf Grundlage eines derartigen berechneten Korrekturwerts durch die zentrale Verarbeitungseinheit (10) in einem zweiten Abschnitt der festgelegten Ausführungszeitperiode, welcher von dem ersten Abschnitt verschieden ist,
- Rückstellen (207, 221) der Batterien der elektrischen Vorrichtung (1) durch die zentrale Verarbeitungseinheit (10) auf Grundlage eines Fehlersignals, welches durch die zentrale Verarbeitungseinheit (10) erzeugt wird, um sie in einen Stand-by Zustand zu bringen, welcher auch den erfassten Fehler anzeigt.

2. Verfahren (200) nach Anspruch 1, wobei der Schritt des Regelns/Steuerns (211) einen Schritt eines Überprüfens (212), ob das elektrische Netzwerk (RE) in einem Zustand von induktiver Toleranz ist, durch die zentrale Verarbeitungseinheit (10) auf Grundlage des berechneten Korrekturwerts umfasst.

3. Verfahren (200) nach Anspruch 2, wobei der Schritt des Regelns/Steuerns (211), in dem Fall, in welchem das Netzwerk in einem Zustand von induktiver Toleranz ist, den Schritt eines Aufrechterhaltens (213) einer derartigen Position, welche den Zustand induktiver Toleranz anzeigt, durch die zentrale Verarbeitungseinheit (10) umfasst.

4. Verfahren (200) nach Anspruch 2, wobei der Schritt des Regelns/Steuerns (211), in dem Fall, in welchem das Netzwerk nicht in einem Zustand induktiver Toleranz ist, einen Schritt eines Überprüfens (214), ob das elektrische Netzwerk (RE) in einem Zustand von kapazitiver Toleranz ist, durch die zentrale Verarbeitungseinheit (10) auf Grundlage des berechneten Korrekturwerts umfasst.

5. Verfahren (200) nach Anspruch 4, wobei der Schritt des Regelns/Steuerns (211), in dem Fall, in welchem das Netzwerk in einem Zustand von kapazitiver Toleranz ist, den Schritt eines Aufrechterhaltens (215) einer derartigen Position, welche den Zustand von kapazitiver Toleranz anzeigt, durch die zentrale Verarbeitungseinheit (10) umfasst.

6. Verfahren (200) nach Anspruch 4, wobei der Schritt des Regelns/Steuerns (211), in dem Fall, in welchem das Netzwerk nicht in einem Zustand kapazitiver Toleranz ist, den Schritt eines Überprüfens (216), ob das Netzwerk eine induktive Einstellung benötigt, durch die zentrale Verarbeitungseinheit (10) auf Grundlage des berechneten Korrekturwerts umfasst.

7. Verfahren (200) nach Anspruch 6, wobei der Schritt des Regelns/Steuerns (211), in dem Fall, in welchem das Netzwerk eine induktive Einstellung benötigt, einen Schritt eines Einstellens (217) der Mehrzahl von Mikrokapazitäten (80) durch die zentrale Verarbeitungseinheit (10) umfasst, um dem ansteigenden Leistungsfaktor zu folgen, welcher anzeigt, dass ein Bedarf für eine induktive Einstellung besteht.

8. Verfahren (200) nach Anspruch 6, wobei der Schritt des Regelns/Steuerns (211), in dem Fall, in welchem das Netzwerk keine induktive Einstellung benötigt, einen Schritt eines Überprüfens (218), ob das elektrische Netzwerk eine kapazitive Einstellung benötigt, durch die zentrale Verarbeitungseinheit (10) auf Grundlage des berechneten Korrekturwerts umfasst.

9. Verfahren (200) nach Anspruch 8, wobei der Schritt des Regelns/Steuerns (211), in dem Fall, in welchem das elektrische Netzwerk eine kapazitive Einstellung benötigt, einen Schritt eines Einstellens (219) der Mehrzahl von Mikrokapazitäten (80) durch die zentrale Verarbeitungseinheit (10) umfasst, um dem abnehmenden Leistungsfaktor zu folgen, welcher das Vorliegen einer Notwendigkeit einer kapazitiven Einstellung anzeigt.

10. Verfahren (200) nach Anspruch 8, wobei der Schritt des Regelns/Steuerns (211), in dem Fall, in welchem das elektrische Netzwerk keine kapazitive Einstellung benötigt, den Schritt eines Überprüfens (220), ob ein Fehler vorliegt, durch die Verarbeitungseinheit (10) auf Grundlage eines derartigen Korrekturwerts umfasst.

11. Verfahren (200) nach einem der vorhergehenden Ansprüche, ferner umfassend einen Schritt eines Vergleichens (208) einer Betriebstemperatur der elektrischen Vorrichtung (1) mit einem vorbestimmten Sicherheitstemperaturwert durch die zentrale Verarbeitungseinheit (10) in dem ersten Abschnitt der festgelegten Ausführungszeitperiode.

12. Verfahren (200) nach einem der vorhergehenden Ansprüche, wobei der zweite Abschnitt der festgelegten Ausführungszeitperiode kürzer ist als der erste Abschnitt der festgelegten Ausführungszeitperiode.

13. Automatische elektrische Rephasierungsvorrichtung (1) eines elektrischen Netzwerks (RE), umfassend:
- eine zentrale Verarbeitungseinheit (10);
- einen nicht-volatilen Speicher (20) und einen volatilen Speicher (30), welche mit der zentralen Verarbeitungseinheit (10) betriebsmäßig verbunden sind;
- Mittel (150) zum Erfassen von elektrischen Betriebsparametern des elektrischen Netzwerks (RE), welche mit der zentralen Verarbeitungseinheit (10) durch Mittel (160) zur Konditionierung derartiger elektrischer Parameter betriebsmäßig verbunden sind;
- Regel-/Steuermittel (90), welche zwischen der zentralen Verarbeitungseinheit (10) und einer Mehrzahl von Schaltern (100) betriebsmäßig verbunden sind, wobei die Regel-/Steuermittel (80) dazu eingerichtet sind, das Öffnen oder Schließen der Mehrzahl von Schaltern auf Grundlage von Regel-/Steuersignalen (SC), welche durch die zentrale Verarbeitungseinheit (10) bereitgestellt werden, zu regeln/steuern;
- eine Mehrzahl von Mikrokapazitäten (80), welche zwischen der Mehrzahl von Mikroschaltern (100) und dem elektrischen Netzwerk (RE) betriebsmäßig verbunden sind, wobei die Mehrzahl von Mikrokapazitäten (80) für ein Hinzufügen zu dem und ein Entfernen aus dem elektrischen Netzwerk (RE) auf Grundlage der Betätigung der Mehrzahl von Mikroschaltern (100) durch die Regel-/Steuermittel (90) eingerichtet sind;
wobei die zentrale Verarbeitungseinheit (10) dazu eingerichtet ist, das automatische Rephasierungsverfahren (200) nach einem der vorhergehenden Ansprüche zu implementieren.

## Revendications

1. Procédé (200) de remise en phase automatique du courant d'un réseau électrique domestique (RE) ou similaire, par un appareil de remise en phase électrique (1) relié fonctionnellement à un tel réseau électrique (RE), comprenant des étapes consistant à :
- comparer (202), pour une première portion d'un délai d'exécution défini, par l'intermédiaire d'une unité centrale de traitement (10) d'un tel appareil de remise en phase électrique (1), des paramètres de fonctionnement électriques détectés en provenance du réseau électrique (RE) à des paramètres de fonctionnement de référence électriques prédéfinis respectifs, ladite étape de comparaison (202) comprenant une étape de calcul (205), par l'intermédiaire de l'unité centrale de traitement (10), sur la base de tels paramètres de fonctionnement électriques, d'un décalage de phase représentatif du facteur de puissance ;
- échantillonner (209), par l'intermédiaire de l'unité centrale de traitement (10), dans la première portion du délai d'exécution défini, lesdits paramètres de fonctionnement électriques détectés en provenance du réseau électrique et le décalage de phase calculé ;
- calculer (210), par l'intermédiaire de l'unité de traitement (10), dans la première portion du délai d'exécution défini, une valeur de correction du décalage de phase calculé ;
- commander (211), par l'intermédiaire de l'unité centrale de traitement (10), dans une seconde portion du délai d'exécution défini, distincte de la première portion, l'insertion ou le retrait d'une quantité d'une pluralité de micro-capacités du réseau électrique (RE) sur la base d'une telle valeur de correction calculée,
- réinitialiser (207, 221), par l'intermédiaire de l'unité centrale de traitement (10), sur la base d'un signal d'erreur généré par l'unité centrale de traitement (10), les batteries de l'appareil électrique (1) afin de l'amener dans un état de veille indiquant également l'erreur détectée.

2. Procédé (200) selon la revendication 1, dans lequel l'étape de commande (211) comprend une étape de vérification (212) consistant à vérifier, par l'intermédiaire de l'unité centrale de traitement (10), sur la base de la valeur de correction calculée, si le réseau électrique (RE) est dans un état de tolérance inductive.

3. Procédé (200) selon la revendication 2, dans lequel l'étape de commande (211), dans le cas où le réseau est dans un état de tolérance inductive, comprend l'étape de maintien (213), par l'intermédiaire de l'unité centrale de traitement (10), d'une telle position indiquant l'état de tolérance inductive.

4. Procédé (200) selon la revendication 2, dans lequel l'étape de commande (211), dans le cas où le réseau n'est pas dans un état de tolérance inductive, comprend une étape de vérification (214) consistant à vérifier, par l'intermédiaire de l'unité centrale de traitement (10), sur la base de la valeur de correction calculée, si le réseau électrique (RE) est dans un état de tolérance capacitive.

5. Procédé (200) selon la revendication 4, dans lequel l'étape de commande (211), dans le cas où le réseau est dans un état de tolérance capacitive, comprend l'étape de maintien (215), par l'intermédiaire de l'unité centrale de traitement (10), d'une telle position indiquant l'état de tolérance capacitive.

6. Procédé (200) selon la revendication 4, dans lequel l'étape de commande (211), dans le cas où le réseau n'est pas dans un état de tolérance capacitive, comprend l'étape de vérification (216) consistant à vérifier, par l'intermédiaire de l'unité centrale de traitement (10), sur la base de la valeur de correction calculée, si le réseau nécessite un ajustement inductif.

7. Procédé (200) selon la revendication 6, dans lequel l'étape de commande (211), dans le cas où le réseau nécessite un ajustement inductif, comprend une étape d'ajustement (217), par l'intermédiaire de l'unité centrale de traitement (10), de la pluralité de micro-capacités (80) afin de suivre l'élévation du facteur de puissance indiquant la nécessité d'un ajustement inductif.

8. Procédé (200) selon la revendication 6, dans lequel l'étape de commande (211), dans le cas où le réseau ne nécessite pas un ajustement inductif, comprend une étape de vérification (218) consistant à vérifier, par l'intermédiaire de l'unité centrale de traitement (10), sur la base de la valeur de correction calculée, si le réseau électrique nécessite un ajustement capacitif.

9. Procédé (200) selon la revendication 8, dans lequel l'étape de commande (211), dans le cas où le réseau électrique nécessite un ajustement capacitif, comprend une étape d'ajustement (219), par l'intermédiaire de l'unité centrale de traitement (10), de la pluralité de micro-capacités (80) afin de suivre la diminution du facteur de puissance indiquant la présence d'un besoin d'ajustement capacitif.

10. Procédé (200) selon la revendication 8, dans lequel l'étape de commande (211), dans le cas où le réseau électrique ne nécessite pas un ajustement capacitif, comprend l'étape de vérification (220) consistant à vérifier, par l'intermédiaire de l'unité de traitement (10), sur la base d'une telle valeur de correction, s'il y a une erreur.

11. Procédé (200) selon l'une quelconque des revendications précédentes, comprenant également une étape de comparaison (208), par l'intermédiaire de l'unité centrale de traitement (10), dans la première portion du délai d'exécution défini, d'une température de fonctionnement de l'appareil électrique (1) à une valeur de température de sécurité prédéterminée.

12. Procédé (200) selon l'une quelconque des revendications précédentes, dans lequel ladite seconde portion du délai d'exécution défini est plus courte que la première portion du délai d'exécution défini.

13. Appareil de remise en phase électrique automatique (1) d'un réseau électrique (RE) comprenant :
- une unité centrale de traitement (10) ;
- une mémoire non-volatile (20) et une mémoire volatile (30) reliées fonctionnellement à l'unité centrale de traitement (10) ;
- un moyen (150) pour détecter des paramètres de fonctionnement électriques du réseau électrique (RE) relié fonctionnellement à l'unité centrale de traitement (10) par l'intermédiaire d'un moyen (160) pour conditionner lesdits paramètres électriques ;
- un moyen de commande (90) relié fonctionnellement entre l'unité centrale de traitement (10) et une pluralité d'interrupteurs (100), ledit moyen de commande (80) étant agencé pour commander l'ouverture ou la fermeture de ladite pluralité d'interrupteurs sur la base de signaux de commande (SC) fournis par l'unité centrale de traitement (10) ;
- une pluralité de micro-capacités (80) reliées fonctionnellement entre ladite pluralité de micro-interrupteurs (100) et le réseau électrique (RE), ladite pluralité de micro-capacités (80) étant agencée en vue d'une insertion dans le, et d'un retrait du, réseau électrique (RE) en fonction de l'actionnement de la pluralité de micro-interrupteurs (100) par le moyen de commande (90) ;
ladite unité centrale de traitement (10) étant configurée pour mettre en oeuvre le procédé de remise en phase automatique (200) selon l'une quelconque des revendications précédentes.
